# EUROPEAN PATENT APPLICATION

(11) **EP 3 398 448 A1**
(43) Date of publication of application: **07.11.2018**
(21) Application number: 17382250.3
(22) Date of filing: 05.05.2017
(51) Int. Cl.: A23K 20/137, A23K 20/195, A23K 50/30, A23K 50/60

(54) **FATTENING ADDITIVE FOR ANIMAL NUTRITIONAL COMPOSITION**

(71) Applicant: Vall Garraf, S.L., 08859 Begues (ES)
(72) Inventor: DOLZ LUNA, Santiago, 08290 CERDANYOLA DEL VALLÈS (ES)
(74) Representative: Ponti & Partners, S.L.P

(57) **Abstract**

The invention relates to the use of at least 10 ppm and up to 500 ppm, based on the total composition of a berberine, obtained naturally or synthetically, with the formula (I), wherein the berberine is in the form of a salt selected from berberine hydrochloride or berberine sulfate present at a concentration of at least 95% by weight with respect to the total weight of the berberine composition, in an animal nutritional composition, as a feed additive for fattening.

## Description

The present invention relates to the use of a berberine as an ingredient or additive in animal nutrition. In particular, it relates to the use of a berberine in the form of a salt selected from berberine hydrochloride or berberine sulfate as an ingredient or additive in an animal feed or a drink designed to be ingested by the animal.

### Background of the invention

Currently, diarrhoea has become a prevalent disease in animal farms, which may even cause the death of animals, thereby resulting in great economic losses for farmers.

For this reason, in animal production it is habitual to supply antibiotics in order to control and prevent diseases caused by bacteria and/or protozoa. The current products used to control bacteria and protozoa are mostly antibiotics or substances that may end up being harmful for the environment, such as, for example, zinc oxide.

Moreover, due to improper long-term administration, a large number of bacteria have become resistant to these medicaments; consequently, the drugs that are habitually used are increasingly less effective, in some cases even 100%-resistant, such that controlling these diseases is increasingly difficult. As a result, there is increasing pressure to reduce the use of antibiotics due to the potential cross-resistances that might appear in human medicine; see Timothy F. Landers et al., in "A Review of Antibiotic Use in Food Animals: Perspective, Policy, and Potential'*.*

The use of berberine in humans has been described as antidiarrhoeal, antiparasitic, analgesic, anti-inflammatory and anti-carcinogenic.

Berberine in humans has also been used in topical pharmaceutical formulations in EP2448577, for the treatment of rosacea and other skin disorders related to facial redness in humans.

As an alternative to antibiotics, various groups of products have been proposed in the animal production sector that attempt to contribute to the use of a smaller load of antibiotics; for example, organic acids, probiotics, prebiotics, enzymes, immune system stimulants, essential oils, extracts from different plants, or mixtures of these components.

Although the literature has disclosed assays for the effectiveness of berberine in animals as an antidiarrhoeal and antiprotozoal agent, berberine has generally been described in the pharmaceutical field.

### Description of the invention

Due to the high demand for foods of animal origin, it is desirable to increase their production; for this reason, many efforts have been aimed at finding mechanisms that accelerate animal growth, especially during their early life cycles, when growth is more vulnerable to external factors.

The present invention relates to the use of at least 10 ppm and up to 500 ppm based on the total composition of a berberine obtained from vegetables or synthetically of the formula: 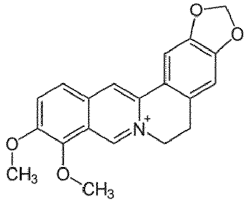 wherein the berberine is in the form of a salt selected from berberine hydrochloride or berberine sulfate at a concentration of at least 95% by weight with respect to the total weight of the berberine composition as a natural additive or ingredient for animal breeding, fattening or reproduction in an animal nutritional composition.

It is worth considering the use of berberine as a natural additive for breeding, fattening and reproduction in an animal nutritional composition, where the animal nutritional composition includes animal feed or drink designed to be ingested by the animal. The berberine may be of vegetable origin or synthetic.

Berberine is a quaternary ammonium salt belonging to the group of isoquinoline alkaloids. It is found in plants of the family Berberis, for example, *Berberis aquifolium* and *Berberis vulgaris,* amongst others. Its formula is C₂₀H₁₈NO₄⁺ and its molar mass is 336.3612 g/mol.

In particular, *Berberis vulgaris* is a bush vegetable species of the family Berberidaceae. It is known to contain isoquinoline alkaloids such as berberine, palmatine and jathrorrhizine, and bisbenzyltetrahydroisoquinoline-derived alkaloids such as berbamine, oxyacanthine and isotetrandine.

Therefore, there are different sources from which to obtain berberine, whether in the form of an extract or directly from unextracted parts of the plant, or even berberine obtained synthetically.

The berberine that is used in the present invention is presented in the form of berberine hydrochloride or berberine sulfate, and the concentration of berberine in the total composition of berberine is at least 95% by weight, preferably at least 97%, with respect to the weight of the total composition of berberine.

Schematically, berberine hydrochloride of vegetable origin may be obtained through the following general steps: preparing the plant *berberis vulgaris* or parts thereof; crushing; subjecting to aqueous extraction or alcohol extraction; crystallisation; dissolution; filtration; drying; sieving and packing; to obtain the berberine composition, which comprises berberine hydrochloride in the solid state.

In one embodiment, the use is of at least 50 ppm and up to 300 ppm, based on the total composition of berberine, with respect to the weight of the animal nutritional composition.

In another embodiment, the use is of at least 100 ppm and up to 250 ppm, based on the total composition of berberine, with respect to the weight of the animal nutritional composition.

In the present invention, the term "animal nutritional composition" is understood to mean an animal feed or a drink designed to be ingested by the animal.

In the present invention, the term "animal" is understood to mean an animal intended for the production of meat, milk or eggs for human consumption, or for reproduction in order to produce animals for the aforementioned purpose; in particular, pigs, rabbits, and poultry intended for human consumption.

In one embodiment, berberine in the form of a salt selected from berberine hydrochloride or berberine sulfate is used as a natural additive or ingredient for breeding, fattening or reproduction in animal feed, wherein the animal feed is a preparation that further comprises a mixture of ground hazelnut or almond shells, and citrus bioflavonoids.

In another embodiment, berberine in the form of a salt selected from berberine hydrochloride or berberine sulfate is used as a natural additive or ingredient for breeding, fattening or reproduction in drink designed to be ingested by the animal, wherein said drink is water that further comprises an organic solvent acceptable for animal consumption.

The use of berberine as a natural additive or ingredient for breeding, fattening or reproduction in an animal nutritional composition is performed by oral administration.

In another embodiment, the animal nutritional composition is a nutraceutical formulation.

### Brief description of the figures

In order to contribute to a better understanding of what has been explained above, a set of drawings is attached wherein, schematically and only as a non-limiting example, an embodiment is represented.

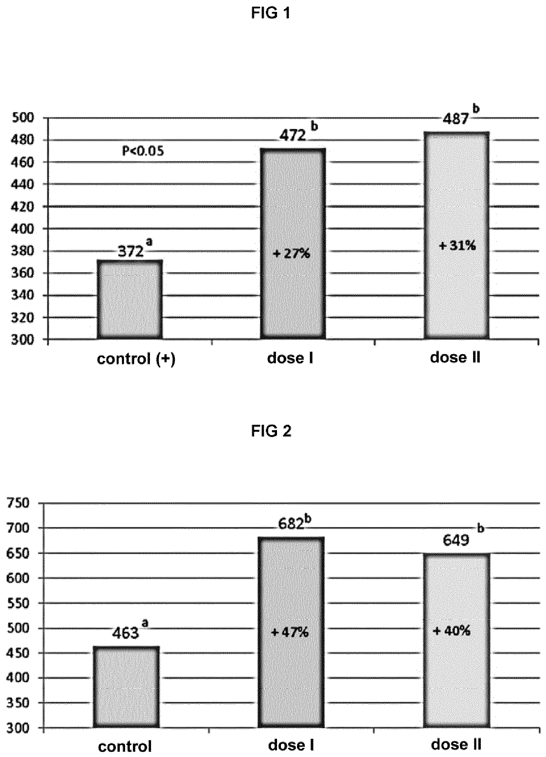

Figure 1 shows a bar chart of the daily weight gain (g) of piglets from weaning (28 days) until entry into the fattening phase (+23 days) treated with zinc oxide (OZn) or with two doses of the total composition of berberine under commercial production conditions, where dose I comprises 100 ppm and dose II comprises 200 ppm.
Figure 2 shows a bar chart of the daily feed consumption (g) of piglets from weaning (28 days) until entry into the fattening phase (+23 days) treated with zinc oxide (OZn) or with two doses of the total composition of berberine under commercial production conditions, where dose I comprises 100 ppm and dose II comprises 200 ppm.

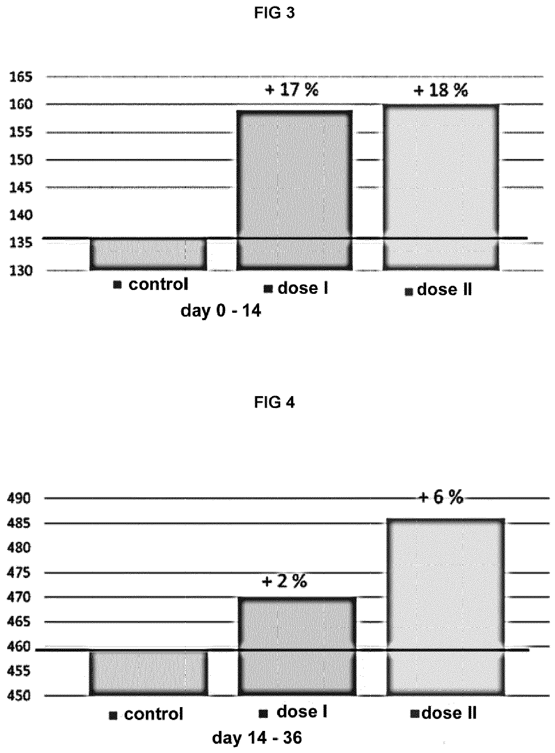

Figure 3 shows a bar chart of the daily weight gain (g) of piglets from weaning (28 days) until 14 days after weaning, fed with feed containing two doses of the total composition of berberine under experimental production conditions, where dose I comprises 100 ppm and dose II comprises 200 ppm. The bar that represents the reference control group contains only animal feed.
Figure 4 shows a bar chart of the daily weight gain (g) of piglets from 14 days after weaning until entry into the fattening phase, 36 days after weaning, fed with two doses of the total composition of berberine under experimental production conditions, where dose I comprises 50 ppm and dose II comprises 100 ppm. The bar that represents the reference control group contains only animal feed.

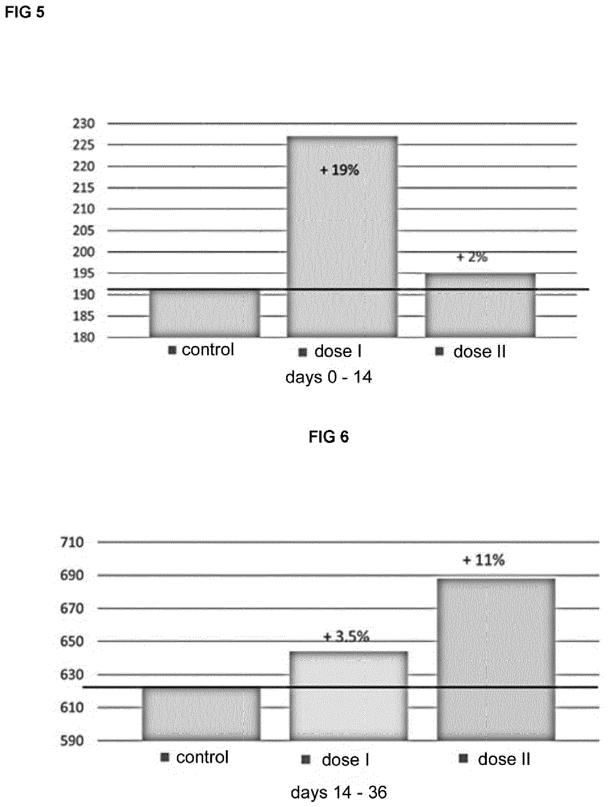

Figure 5 shows a bar chart of the daily feed consumption (g) of piglets from weaning (28 days) until 14 days after weaning, fed with feed containing two different doses of the total composition of berberine under experimental production conditions, where dose I comprises 100 ppm and dose II comprises 200 ppm. In the bar that represents the reference control group, the animals were fed with untreated feed.
Figure 6 shows a bar chart of the daily feed consumption (g) of piglets from 14 days after weaning until entry into the fattening phase, 36 days after weaning, fed with feed containing two doses of the total composition of berberine under experimental production conditions, where dose I comprises 50 ppm and dose II comprises 100 ppm. The bar that represents the reference control group contains only animal feed.

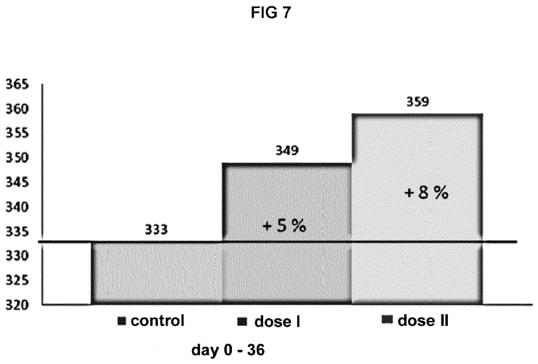

Figure 7 shows a bar chart of the results for the mean weight gain (g) with respect to the negative control of piglets throughout the overall period, fed with feed containing two doses of the total composition of berberine under experimental production conditions, where dose I comprises 100 ppm during the first period (Figure 3) and 50 ppm during the second period (Figure 4), and dose II comprises 200 ppm during the first period (Figure 3) and 100 ppm during the second period (Figure 4).

### Description of a preferred embodiment

Two assays were performed in order to determine the efficacy of the use of berberine in animal nutrition, more specifically in piglets.

### 1) First assay: Commercial conditions (AgroTest)

300 piglets were used, which were weaned at 28 days and subjected to 3 treatments: Control (with 3000 ppm zinc oxide) and two groups with two different doses of *berberis vulgaris* extracts (total composition of berberine >97% by weight of berberine hydrochloride, dose I: 100 ppm and dose II: 200 ppm) not containing zinc oxide. 5 repeats per treatment were performed. Data were collected on the appearance of diarrhoea, consumption, and weight from weaning until entry into the fattening phase (days 28 to 51 of age).

### Results

There was no diarrhoea or mortality in any repeat of any treatment; therefore, we may conclude that the inclusion of berberine hydrochloride was able to keep the piglets free from any enteric problems during the most critical production period and that the protection provided against diarrhoea was the same as that provided by zinc oxide.

Surprisingly, it was observed that both the intake and the growth of the animals that consumed berberine hydrochloride were much greater than those of the group treated with zinc oxide (control). This greater difference in growth, close to 30%, meant that the piglets entered the fattening phase with 3.3 more kg of live weight than their siblings in the control group.

### 2) Second assay: Experimental conditions (IRTA)

144 piglets were used, which were weaned at 26 days and subjected to 3 treatments: negative control (without any medication or additives), two phases (0-14 days and 14-36 days after weaning) with two different doses of *berberis vulgaris* extracts (total composition of berberine >97% by weight of berberine hydrochloride, dose I: 100 ppm and dose II: 200 ppm during the 0-14-day phase, and dose I: 50 ppm and dose II: 100 ppm during the 14-36-day phase). 9 repeats per treatment were performed. The experiment was performed during the transition period until entry into the fattening phase, and two feeds were used: Pre-starter until 14 days and starter until entry into the fattening phase.

### Results

There were no diarrhoea or mortality incidents in any of the 3 groups. The growth results indicate that, during the first phase (pre-starter), the animals that consumed berberine hydrochloride presented much greater growth than the negative control, of the order of 18% greater, and, during the second phase (starter), the improvement in growth was 6% with respect to the negative control. The animals that had been treated with berberine hydrochloride went through the most critical phase (Pre-starter) more easily and grew much more than the untreated animals. Even though differences continued to be observed, once this most critical phase had elapsed, the differences were not noteworthy. Overall, the animals that consumed berberine hydrochloride entered into the fattening phase with 1 more kg of live weight.

In both experiments, it is worth noting that the best results for the inclusion of berberine hydrochloride were observed under commercial conditions, first assay, where it is very likely that the infection pressure is higher than at a research institute, second assay, and this may perhaps explain the differences in daily growth observed when comparing the commercial production and the experimental farm.

Although we have referred to a specific embodiment of the invention, it is evident for persons skilled in the art that the use of berberine as a natural additive or ingredient for animal breeding, fattening or reproduction in an animal nutritional composition described is susceptible to variations and modifications, and that all the details mentioned above may be replaced with other technically equivalent ones, without going beyond the scope of protection defined by the attached claims.

## Claims

1. Use of at least 10 ppm and up to 500 ppm based on the total composition of a berberine obtained naturally or synthetically of the formula: 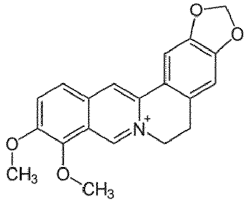 wherein the berberine is in the form of a salt selected from berberine hydrochloride or berberine sulfate at a concentration of at least 95% by weight with respect to the total weight of the berberina composition, as an additive or ingredient for animal breeding, fattening or reproduction in an animal nutritional composition.

2. Use according to claim 1, wherein the berberine in the form of berberine hydrochloride or berberine sulfate is present at a concentration of at least 97% by weight with respect to the total weight of the berberine composition.

3. Use according to any of claims 1 or 2, wherein the use is at least 50 ppm and up to 300 ppm, based on the total composition of berberine, with respect to the weight of the animal nutritional composition.

4. Use according to any of claims 1 to 3, wherein the use is at least 100 ppm and up to 250 ppm, based on the total composition of berberine, with respect to the weight of the animal nutritional composition.

5. Use according to any of the preceding claims, wherein the animal nutritional composition includes an animal feed or a drink designed to be ingested by the animal.

6. Use according to claim 5, wherein the animal feed is a preparation that further comprises a mixture of ground hazelnut or almond shells, and citrus bioflavonoids.

7. Use according to claim 5, wherein the drink designed to be ingested by the animal is water that further comprises an organic solvent acceptable for animal consumption.
